# EUROPEAN PATENT APPLICATION

(11) **EP 4 636 629 A1**
(43) Date of publication of application: **22.10.2025**
(21) Application number: 25159795.1
(22) Date of filing: 25.02.2025
(51) Int. Cl.: G06F 21/57, G06Q 50/04, H04L 9/08

(54) **COMPUTER SYSTEM AND METHOD FOR PROVIDING SECURED CRYPTOGRAPHIC MANAGEMENT FOR DESIGN AND MANUFACTURING PROCESSES**

(30) Priority: 19.04.2024 US 202418640758
(71) Applicant: Schneider Electric USA, Inc., Boston, MA 02108 (US)
(72) Inventor: Pyle, Michael William, Hermitage, TN, 37076 (US); Lloyd, Chad Andrew, Andover, MA, 01810 (US)
(74) Representative: Manitz Finsterwald Patent- und Rechtsanwaltspartnerschaft mbB

(57) **Abstract**

A computer-implemented method for authenticating software loaded in a device during a device manufacturing process having one or more manufacturing stages. A unique identifier first key is generated for encryption of software to be loaded on a manufactured device. The first key is loaded onto a security device for storage on a server. A unique identifier second key is generated that is to be included as a parameter with software to be loaded on the manufactured device whereby the second key is encrypted utilizing the first key. The encrypted second key is incorporated as a software parameter in the device whereafter the second key is decrypted utilizing the first key stored in the computer server to authenticate the software loaded on the device during its manufacturing process.

## Description

### BACKGROUND

### 1. FIELD

The disclosed embodiments generally relate to verifying a software attribute of a computing device, and more particularly to distributing software verifying secrets that are common to a product family into a manufacturing environment and process.

### 2. DESCRIPTION OF RELATED ART

During a manufacturer process for a device that includes computer software and/or firmware, there is often a need to inject cryptographic secrets, such as encryption keys or a salt used in hashing parameters, into a device during its manufacturing process. This typically requires secure handling of the secret when providing it to various manufacturing stages, and secure handling of the secret at the manufacturing facilities and during the manufacturing process. The need for secure systems and applications is growing. Presently, secured Integrated Circuits (ICs) are often programmed with security keys on the factory floor. Secure keys may be used in a variety of ways, such as, for example, to protect stored data, control access to digital content, or encrypt/authenticate data used in transactions. Today, these keys can be stored in a one-time programmable memory, which may hold keys directly or hold a base key that is used with cryptographic functions to generate derivative keys for various functions.

Prior solutions for deploying unique secrets per product, such as Device Genuineness keys and certificates, exist from companies such as PrimeKey. However, such prior solutions are often complex and cumbersome in a device's manufacturing process. Thus, a need exists to provide an improved and efficient process for distributing secrets that are common to a product family into a manufacturing environment and process.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

To achieve these and other advantages and in accordance with the purpose of the illustrated embodiments, in one aspect, a computer implemented method and system for distributing secrets (e.g., symmetric cryptography keys), that are preferably common to a product/device family, into a manufacturing/design process environment and processes, preferably utilizing a physical device that protects sensitive data while also being tamper-resistant and hardened, such as a Hardware Security Module (HSM).

In one aspect, a computer-implemented method for authenticating software loaded in a device during a device manufacturing process having one or more manufacturing stages is provided, in which a unique identifier first key is generated for encryption of software to be loaded on a manufactured device. The first key is loaded onto a security device for storage on a server. A unique identifier second key is generated that is to be included as a parameter with software to be loaded on the manufactured device whereby the second key is encrypted utilizing the first key. The encrypted second key is incorporated as a software parameter in the device whereafter the second key is decrypted utilizing the first key stored in the computer server to authenticate the software loaded on the device during its manufacturing process.

In another aspect, a computer-implemented method for authenticating/verifying software loaded in a manufactured device during its manufacturing process, which consists of various manufacturing stages is described in which a unique identifier first key is generated that is to be associated with software to be loaded on the device during its device manufacturing process. The first key is preferably loaded onto N Hardware Security Modules (First HSMs). A unique identifier second key is then generated that is to be included as a parameter with the software to be loaded on the during the device manufacturing process whereby the second key is encrypted utilizing the first key from one of the First HSMs. A First HSM is then loaded on a computer server associated with an intermediate manufacturing stage for the device. Access credentials to the First HSM having Key 1 is then sent to the computer server associated with the intermediate manufacturing stage. The encrypted second key is then sent to an initial manufacturing stage such that the encrypted second key is incorporated as a parameter in the at least first software to be loaded in the device whereafter the software having the incorporated encrypted second key is then sent to the intermediate manufacturing stage. The software having the incorporated encrypted second key is sent from the intermediate manufacturing stage to the final manufacturing stage so as to be loaded as a software parameter on the device. Decryption of the second encrypted key incorporated as a parameter of the software loaded on the device is then requested from the final manufacturing stage to the intermediate manufacturing stage utilizing the first key stored in the First HSM (preferably via utilization of the access credentials to the First HSM) so as to authenticate the software loaded on the device during the manufacturing process.

### BRIEF DESCRIPTION OF THE DRAWINGS

So that those skilled in the art to which the subject disclosure appertains will readily understand how to make and use the devices and methods of the subject disclosure without undue experimentation, preferred illustrated embodiments thereof will be described in detail herein below with reference to certain figures, wherein:
FIG. 1 illustrates an example communication network utilized with one or more of the illustrated embodiments;
FIG. 2 illustrates an example network device/node utilized with one or more of the illustrated embodiments; and
FIGS 3 and 4 are flow diagram illustrating an exemplary computer implemented method for providing secured cryptographic management for a manufacturing process in accordance with the illustrated embodiments.

### DETAILED DESCRIPTION OF CERTAIN EMBODIMENTS

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program in accordance with the illustrated embodiments.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described above. One skilled in the art will appreciate further features and advantages of the illustrated embodiments based on the above-described embodiments. Accordingly, the illustrated embodiments are not to be limited by what has been particularly shown and described, except as indicated by the appended claims.

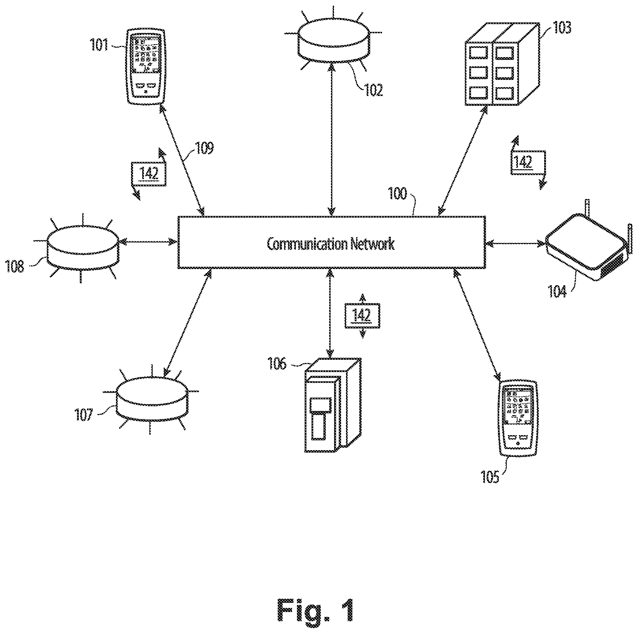

Turning now descriptively to the drawings, in which similar reference characters denote similar elements throughout the several views, FIG. 1 depicts an exemplary communications network 100 in which below illustrated embodiments may be implemented. It is to be understood a communication network 100 is a geographically distributed collection of nodes interconnected by communication links and segments for transporting data between end nodes, such as personal computers, work stations, smart phone devices, tablets, televisions, sensors and or other devices such as automobiles, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others.

FIG. 1 is a schematic block diagram of an example communication network 100 illustratively comprising nodes/devices 101-108 (e.g., sensors 102, client computing devices 103 (e.g., cryptographic security devices), smart phone devices 105, web servers 106, routers 107, switches 108, databases, and the like) interconnected by various methods of communication. For instance, the links 109 may be wired links or may comprise a wireless communication medium, where certain nodes are in communication with other nodes, e.g., based on distance, signal strength, current operational status, location, etc. Moreover, each of the devices can communicate data packets (or frames) 142 with other devices using predefined network communication protocols as will be appreciated by those skilled in the art, such as various wired protocols and wireless protocols etc., where appropriate. In this context, a protocol consists of a set of rules defining how the nodes interact with each other. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

As will be appreciated by one skilled in the art, aspects of the illustrated embodiments may be embodied as a system, method or computer program product. Accordingly, aspects of the illustrated embodiments may take the form of an entirely hardware embodiment, an entirely software embodiment (including firmware, resident software, micro-code, etc.) or an embodiment combining software and hardware aspects that may all generally be referred to herein as a "device", "apparatus", "module" or "system." Furthermore, aspects of the illustrated embodiments may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the present invention may be written in any combination of one or more programming languages, including an object oriented programming language such as Java, Smalltalk, C++, Python, or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the illustrated embodiments are described below with reference to flowchart illustrations and/or block diagrams of methods, apparatus (systems) and computer program products according to the illustrated embodiments. It will be understood that each block of the flowchart illustrations and/or block diagrams, and combinations of blocks in the flowchart illustrations and/or block diagrams, can be implemented by computer program instructions. These computer program instructions may be provided to a processor of a computer device, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

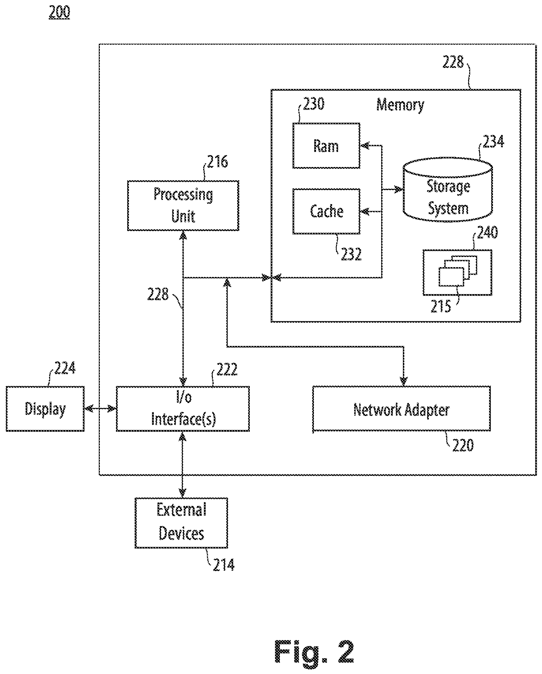

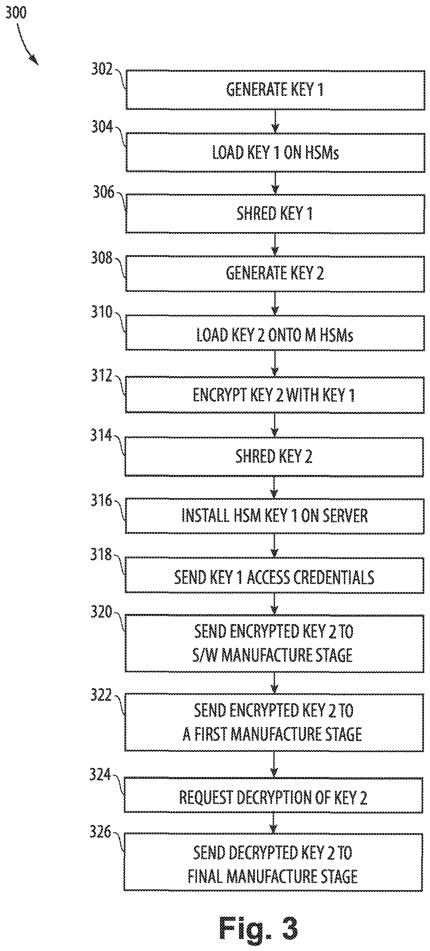

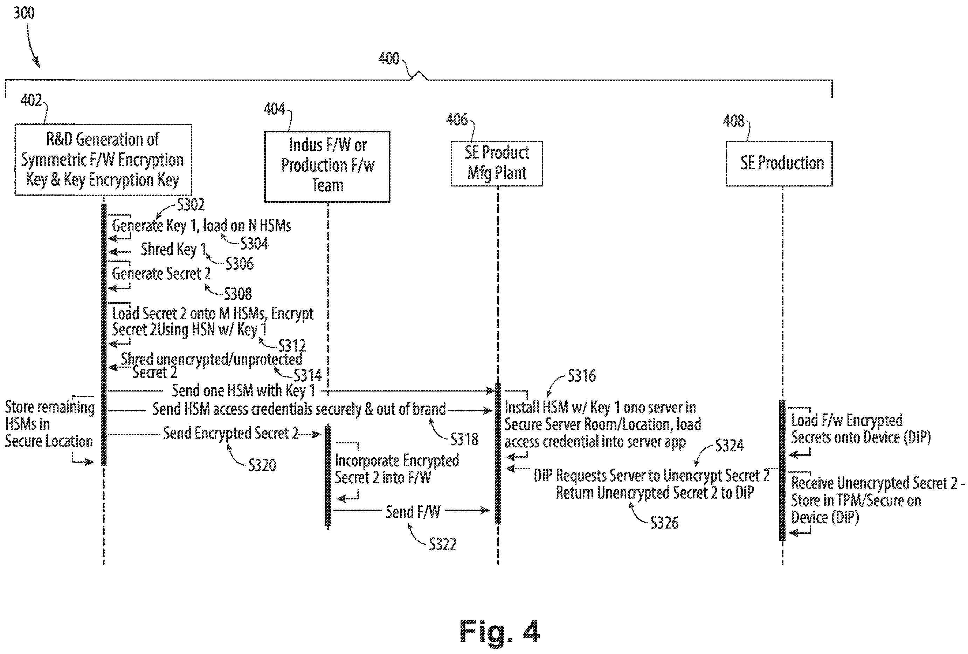

FIG. 2 is a schematic block diagram of an example network computing device 200 (e.g., cryptographic security device 103, server 106, etc.) that may be used (or components thereof) with one or more embodiments described herein (e.g., as one of the nodes shown in the network 100) for providing a computer-implemented process for distributing secrets (e.g., symmetric cryptography keys), that are preferably common to a product/device family, into the manufacturing/design process environment (400, FIG. 4) and processes (300, FIG. 3), preferably utilizing a physical device that protects sensitive data while also being tamper-resistant and hardened, such as a Hardware Security Module (HSM). As explained above, in different embodiments these various devices are configured to communicate with each other in any suitable way, such as, for example, via communication network 100.

Device 200 is intended to represent any type of computer system capable of carrying out the teachings of various illustrated embodiments. Device 200 is only one example of a suitable system and is not intended to suggest any limitation as to the scope of use or functionality of the illustrated embodiments described herein. Regardless, computing device 200 is capable of being implemented and/or performing any of the functionality set forth herein, particularly for securely distributing secrets that are preferably common to a product/device family, into a manufacturing/design process environment, preferably utilizing HSMs for protecting secrets.

It is to be understood and appreciated that computing device 200 is operational with numerous other general purpose or special purpose computing system environments or configurations. Examples of well-known computing systems, environments, and/or configurations that may be suitable for use with computing device 200 include, but are not limited to, personal computer systems, server computer systems, thin clients, thick clients, hand-held or laptop devices, multiprocessor systems, microprocessor-based systems, network PCs, minicomputer systems, and distributed data processing environments that include any of the above systems or devices, and the like. Computing device 200 may be described in the general context of computer system-executable instructions, such as program modules, being executed by a computer system. Generally, program modules may include routines, programs, objects, components, logic, data structures, and so on that perform particular tasks or implement particular abstract data types. Computing device 200 may be practiced in distributed data processing environments where tasks are performed by remote processing devices that are linked through a communications network 100. In a distributed data processing environment, program modules may be located in both local and remote computer system storage media including memory storage devices.

The components of device 200 may include, but are not limited to, one or more processors or processing units 216, a system memory 228, and a bus 218 that couples various system components including system memory 228 to processor 216. Bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Computing device 200 typically includes a variety of computer system readable media. Such media may be any available media that is accessible by device 200, and it includes both volatile and non-volatile media, removable and non-removable media.

System memory 228 can include computer system readable media in the form of volatile memory, such as random-access memory (RAM) 230 and/or cache memory 232. Computing device 200 may further include other removable/non-removable, volatile/non-volatile computer system storage media. By way of example only, storage system 234 can be provided for reading from and writing to a non-removable, non-volatile magnetic media (not shown and typically called a "hard drive"). Although not shown, a magnetic disk drive for reading from and writing to a removable, non-volatile magnetic disk, and an optical disk drive for reading from or writing to a removable, non-volatile optical disk such as a CD-ROM, DVD-ROM or other optical media can be provided. In such instances, each can be connected to bus 218 by one or more data media interfaces. As will be further depicted and described below, memory 228 may include at least one program product having a set (e.g., at least one) of program modules (240) that are configured to carry out the functions of embodiments of illustrated embodiments such as for securely distributing secrets that are preferably common to a product/device family, into a manufacturing/design process environment, preferably utilizing HSMs for protecting secrets (e.g., software signatures).

Program/utility 240, having a set (at least one) of program modules 215, such as underwriting module, may be stored in memory 228 by way of example, and not limitation, as well as an operating system, one or more application programs, other program modules, and program data. Each of the operating system, one or more application programs, other program modules, and program data or some combination thereof, may include an implementation of a networking environment. Program modules 215 generally carry out the functions and/or methodologies of the illustrated embodiments as described herein.

Device 200 may also communicate with one or more external devices 214 such as a keyboard, a pointing device, a display 224, etc.; one or more devices that enable a user to interact with computing device 200; and/or any devices (e.g., network card, modem, etc.) that enable computing device 200 to communicate with one or more other computing devices. Such communication can occur via Input/Output (I/O) interfaces 222. Still yet, device 200 can communicate with one or more networks such as a local area network (LAN), a general wide area network (WAN), and/or a public network (e.g., the Internet) via network adapter 220. As depicted, network adapter 220 communicates with the other components of computing device 200 via bus 218. It should be understood that although not shown, other hardware and/or software components could be used in conjunction with device 200. Examples, include, but are not limited to: microcode, device drivers, redundant processing units, external disk drive arrays, RAID systems, tape drives, and data archival storage systems, etc.

FIGS. 1 and 2 are intended to provide a brief, general description of an illustrative and/or suitable exemplary environment in which the below described illustrated embodiments may be implemented. FIGS. 1 and 2 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

With the exemplary communication network 100 (FIG. 1) and computing device 200 (FIG. 2) being generally shown and discussed above, description of certain illustrated embodiments will now be provided. It is to be understood and appreciated that exemplary embodiments implementing one or more components of FIGS. 1-4 relate to computer devices and processes for securely distributing secrets, preferably in device software and/or firmware, that are preferably common to a product/device family, into a manufacturing/design process environment, preferably utilizing HSMs for protecting secrets. It is to be understood and appreciated a manufactured device as mentioned herein may consist of any suitable manufactured device (e.g., such as circuit breaker component, non-circuit breaker component, control panel component, intelligent devices, etc.) having software (S/W) and/or firmware (F/W) embedded in it during its manufacturing process wherein security of such embedded S/W, F/W is important to thwart counterfeits and/or nefarious tampering of the embedded S/W, F/W.

In accordance with the illustrated embodiments, each HSM utilized herein may consist of any known type of Hardware Security Module suitable for use in accordance with the illustrated embodiments, including for instance a YubiHSM Cryptographic Hardware Security Module. It is to be understood and appreciated that FIGS. 1-4 are intended to provide a brief, general description of an illustrative and/or suitable exemplary environment in which the below described illustrated embodiments may be implemented. As described further below with references to FIGS. 1-4, the illustrated embodiments encompass securely distributing secrets, preferably common to a product/device family, through a design/manufacturing process to provide protection of a secret, such as a private or symmetric key, or secret SALT required by a device. It is to be understood and appreciated that the process for generating a secret (e.g., a symmetric key) is known and thus need not be described herein.

In accordance with the illustrated embodiments, in the below described process (300) for protecting a secret, the actual secret (Secret 2) is not provided to a manufacturing stage (400) except in encrypted form, preferably as a parameter in the Indus Firmware (F/W) or Production F/W. A first symmetric key (Key 1), used to encrypt/unencrypt Secret 2, is generated and preferably securely loaded onto N HSMs (wherein N is >1, for redundancy) with common access credentials, wherein N-1 HSMs are preferably retained in a Research & Development (R&D) stage (402), and/or securely maintained in a one or more entities (e.g., secure location(s)) as backup, and whereby one HSM having Key 1 is provided to a manufacturing stage (e.g., 406). All unprotected forms of Key 1 are permanently shredded/destroyed after being loaded on the N HSMs with Key 1. Preferably, the HSM having Key 1 sent to a certain manufacturing stage (e.g., 406) is installed on a computer server (e.g., 106), preferably in a physically secure location at that manufacturing stage (406) (e.g., a manufacturing plant). The credentials for accessing the HSM having Key 1 are preferably sent to the manufacturing stage having the HSM with Key 1 out of band (e.g., via a secure network communication channel/app) and loaded in the server application for accessing the HSM with Key 1. A second secret (Secret 2) is then generated, and wherein if Secret 2 is also a key, it is preferably loaded onto M separate HSMs (for redundancy purposes) with access credentials, which M HSMs having Key 2 are also preferably retained by R&D (e.g., 402), and/or the generating entity, and likewise stored in a safe or other secure location. The Secret 2 is then encrypted using a HSM with Key 1 loaded on it. The encrypted Key 2 is then preferably provided to the Indus F/W or Production F/W team (e.g., 404) so as to be include as a parameter in the F/W and/or S/W for a device to be manufactured. Preferably, encrypted Key 2 is stored on a USB stick or similar storage device, and preferably is maintained in the same secure location(s) as the HSMs having Key 1 as maintained by R&D or a Key/Secret generating entity associated with the device manufacturing process 400. All unencrypted/unprotected forms of Secret 2 are then likewise permanently shredded/destroyed.

During an initial stage (402) of the manufacturing process (400), the Indus or Production F/W in a Device in production (the Device), via manufacturing process 400, provides the encrypted Secret 2, that was included as a parameter in the Indus or Production F/W, over a secure communication network/channel to the plant's HSM having Key 1, preferably via an API on the server, requesting that the HSM having Key 1 unencrypt Secret 2. Using the aforesaid access credentials provided, the server application accesses the HSM having Key 1 to then use Key 1 to unencrypt the provided encrypted Secret 2. The unencrypted Secret 2 is then preferably sent over the same secure communication network/channel to the production stage (408) having the manufactured Device such that the unencrypted Secret 2 is then stored, preferably in a Trusted Platform Module, or other secure element, associated with the manufactured Device.

It is to be understood and appreciated that if the Secret 2 is a key used for encryption needed to encrypt a new/additional F/W and/or S/W item, the aforementioned HSM having the Key 2 is to be used to encrypt such new F/W and/or S/W item. Additionally, if a HSM with Key 2 fails, R&D (stage 402) preferably utilizes one of its HSMs with Key 1 to unencrypt Secret 2 that has preferably been stored in encrypted form on a USB stick, so as to then load the unencrypted Secret 2 onto a new HSM. The unencrypted/unprotected forms of Secret 2 are then again shredded/destroyed.

With a brief description of an illustrated embodiment provided above, and with reference to FIGS. 3 and 4 (and with continuing reference to Figs. 1 and 2), a process 400 for securely distributing secrets that are preferably common to a product/device family, into a manufacturing/design process environment, preferably utilizing HSMs for protecting secrets in accordance with an illustrative embodiment is now described. It is to be understood and appreciated that FIGS. 1-4 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

With reference now to process 300 of FIGS. 3 and 4, a computer-implemented method for authenticating software (e.g., verifying the digital signature) loaded in a device during a device manufacturing process (300) is now described. For illustrative and descriptive purposes, the device manufacture process 300 shown in FIG. 4 consists of an R&D generation stage for generating Keys (stage 402); and Indus software (S/W) stage (stage 404); a device manufacturing stage (stage 406) and device production stage (stage 408). It is to be understood and appreciated that process 400 is only provided for illustrative purposes and is not to be understood to be limited to what is shown in FIG. 4, as less or more stages may be included, such as supply, distribution and other logistically stages associated with the manufacture of a device.

Starting at step 302, preferably by a computer security device (e.g., 103), a unique identifier first key is generated to be associated with at least first software and/or firmware (S/W, F/W) that is to be loaded on a device during its manufacturing process 400. The unique identifier is preferably a cryptographic identifier such as a symmetric key or cryptographic salt. Next, at stage 304, Key 1 is then loaded onto preferably N Hardware Security Modules (First HSMs) wherein N is preferably greater than 1. As noted herein, only a single first HSM is required as the remainder are for redundancy/backup purposes. After Key 1 is loaded on the N First HSMs, key 1 is then permanently shredded/discarded such that it only exists on the N First HSMs, step 306.

At step 308, the computer security device 103 generates a unique identifier second key (Key 2) (e.g., a cryptographic identifier such as a symmetric key) that is intended to be included as a parameter with the at least first software and/or firmware (S/W, F/W) to be loaded on a device during the device's manufacturing process (400)(step 308). Next (step 310) the generated Key 2 is then loaded on M Second HSMs (wherein M is equal or greater than 1) whereby the Key 2 loaded on the M HSMs (step 310) and is encrypted by Key 1 utilizing a First HSM (step 310). As mentioned above, in certain embodiments, Key 2 will be needed to encrypt additional F/W and/or S/W items to also be included on a manufactured device. After Key 2 is loaded on the M Second HSMs, Key 2 is then permanently shredded/discarded such that it only exists on the M Second HSMs, step 314.

Next, at step 316, preferably a single First HSM is sent to a manufacturing stage (e.g., product manufacturing stage 406) so as to installed on a computer server (e.g., 106), preferably in a physically secure location at that manufacturing stage (406). The credentials for accessing the HSM having Key 1 are preferably sent to the manufacturing stage having the HSM with Key 1 preferably via an out-of-band channel (e.g., via a secure network communication channel/app) so as to be preferably loaded in the computer server application associated with the First HSM for enabling access to the HSM with Key 1 (step 318). At step 320, the encrypted Key 2 is sent to a S/W, F/W manufacturing stage (404) such that the encrypted Key 2 is incorporated as a parameter in the at least first software (S/W, F/W) to be loaded in a device. Thereafter, at step 322, the software (S/W, F/W) having the incorporated encrypted Key 2 is then sent to a production manufacturing stage (408) so as to be loaded onto the manufactured device (step 328). Next, at step 324, preferably in the aforesaid manufacturing stage (408) for the device, a request is made to the manufacturing stage (e.g., product manufacturing stage 406) requesting decryption of the second encrypted key (Key 2) that was incorporated as a parameter of the software (S/W, F/W) loaded on the device by utilizing the first key stored in the First HSM. Access is gained to the First HSM associated with a computer server at the manufacturing stage (404) via utilization of the aforesaid access credentials to the First HSM so as to decrypt the second key (Key 2) to preferably authenticate (e.g., verify the digital signature) the software (S/W, F/W) loaded on the device during the manufacturing process. Once the software (S/W, F/W) is authenticated/verified, at step 326. In accordance with certain embodiments, upon successful authentication/verification of the software (step 324), next at step 326, the decrypted second key (Key 2) is preferably sent back to the production manufacturing stage (stage 408), preferably via a secure communication channel (100) so as to be stored in a Trusted Platform Module (TPM) associated with the device.

With certain illustrated embodiments described above, it is to be appreciated that various non-limiting embodiments described herein may be used separately, combined or selectively combined for specific applications. Further, some of the various features of the above non-limiting embodiments may be used without the corresponding use of other described features. The foregoing description should therefore be considered as merely illustrative of the principles, teachings and exemplary embodiments of this invention, and not in limitation thereof.

It is to be understood that the above-described arrangements are only illustrative of the application of the principles of the illustrated embodiments. Numerous modifications and alternative arrangements may be devised by those skilled in the art without departing from the scope of the illustrated embodiments, and the appended claims are intended to cover such modifications and arrangements.

## Claims

1. A computer-implemented method for authenticating software loaded in a device during a device manufacturing process having one or more manufacturing stages, the method comprising:
generating a first key having a unique identifier;
loading the first key onto at least one Hardware Security Module (First HSM);
generating a second key having a second unique identifier to be included as a parameter with at least first software to be loaded on the device during the device manufacturing process;
encrypting the second key utilizing the first key from the First HSM;
sending the encrypted second key to a manufacturing stage such that the encrypted second key is incorporated as a parameter in the at least first software to be loaded in the device;
loading the software having the incorporated encrypted second key onto the device; and
requesting decryption of the second encrypted key incorporated as a parameter of the software loaded on the device utilizing the first key stored in the First HSM to authenticate the software loaded on the device,
wherein the device in particular consists of a circuit breaker component.

2. The computer-implemented method as recited in claim 1, further including after successful decryption of the second encrypted key, sending the decrypted second key to a final manufacturing stage so as to be stored in one of either a HSM or Trusted Platform Module (TPM) associated with the device.

3. The computer-implemented method as recited in claim 1, wherein:
the first key is loaded onto N First HSMs, wherein N is greater than one;
installing one of the First N HSMs on a computer server associated with a manufacturing stage; and
sending, via a secure communication channel, access credentials to the First HSM for storage on the computer server having the installed First HSM,
wherein each of the First HSMs in particular consist of a YubiHSM Cryptographic Hardware Security Module.

4. The computer-implemented method as recited in claim 3, further including loading the second key onto M Hardware Security Modules (Second HSMs) wherein M is greater than or equal to 1, wherein the second key loaded on the Second HSMs is unencrypted whereby the Second HSMs are operable to encrypt additional software to be loaded on the device during the device manufacturing process.

5. The computer-implemented method as recited in claim 4, wherein:
the first key is permanently shredded after it is loaded onto the First HSMs and the second key is permanently shredded after it is loaded onto the Second HSMs.

6. The computer-implemented method as recited in claim 3, further including securely storing a remainder of the N First HSMs at a physical location separate from the intermediate manufacturing stage having the computer server installed with the first HSM.

7. The computer-implemented method as recited in claim 1, wherein the software loaded on the device is firmware, and/or
wherein the manufacturing process includes supply and distribution stages associated with the manufactured device.

8. A computer-implemented method for authenticating software loaded in a device during a device manufacturing process having one or more manufacturing stages, the method comprising:
generating a first key having a unique identifier to be associated with at least first software to be loaded on the device during the device manufacturing process;
loading the first key onto a Hardware Security Module (HSM);
generating a second key having unique identifier to be included as a parameter with the at least first software to be loaded on the device during the device manufacturing process;
encrypting the second key utilizing the first key from the HSM;
operatively associating the HSM with a computer server associated with a physical location for a said device manufacturing stage;
sending the encrypted second key to a said device manufacturing stage such that the encrypted second key is incorporated as a parameter in the at least first software to be loaded in the device;
loading the software having the incorporated encrypted second key onto the device in a said device manufacturing stage; and
decrypting, in the manufacturing stage having the HSM, the second encrypted key incorporated as a parameter of the software loaded on the device utilizing the first key stored in the HSM to authenticate the software loaded on the device during the manufacturing process.

9. The computer-implemented method as recited in claim 8, further including sending, via a secure communication channel, access credentials to the HSM for association with the computer server operably associated with the HSM.

10. The computer-implemented method as recited in claim 1 or 8, further including after authenticating the at least first software loaded on the device during the manufacturing process, storing the decrypted second key in a Trusted Platform Module (TPM) associated with the device in a said device manufacturing stage.

11. The computer-implemented method as recited in claim 8, wherein the first key is permanently shredded after it is loaded onto the HSM.

12. The computer-implemented method as recited in claim 8, further including loading the second key onto a Second HSM, wherein the second key loaded on the Second HSM is unencrypted whereby the Second HSM is operable to encrypt additional software to be loaded on the device during the device manufacturing process,
wherein the second key is in particular permanently shredded after it is loaded onto the Second HSM.

13. The computer-implemented method as recited in claim 1 or 8 wherein the first key is one of either a symmetric key or cryptographic salt.

14. The computer-implemented method as recited in claim 8, wherein a plurality of First HSMs is provided, each including the first key, and wherein each First HSM consist of a YubiHSM Cryptographic Hardware Security Module.

15. A computer-implemented method for authenticating software loaded in a device during a device manufacturing process having one or more manufacturing stages, the method comprising:
generating a first key having a unique identifier to be associated with at least first software to be loaded on the device during the device manufacturing process;
loading the first key onto a Hardware Security Module (HSM);
generating a second key having a unique identifier to be included as a parameter with the at least first software to be loaded on the device during the device manufacturing process;
encrypting the second key utilizing the first key from the HSM;
operatively associating the HSM with a computer server associated with a physical location for a said device manufacturing stage;
sending the encrypted second key to a said device manufacturing stage such that the encrypted second key is incorporated as a parameter in the at least first software to be loaded in the device; and
loading the software having the incorporated encrypted second key onto the device in a said device manufacturing stage wherein after the software is loaded on the device, the device automatically initiates decryption of the second encrypted key utilizing the first key stored in the HSM to authenticate the software loaded on the device during the manufacturing process.
